Europäisches Patentamt

European Patent Office

Office européen des brevets

(11) Veröffentlichungsnummer: **0 303 564 B1**

# EUROPÄISCHE PATENTSCHRIFT

(45) Veröffentlichungstag der Patentschrift: **16.12.92**

(51) Int. Cl.⁵: **B23B 31/00**, B23B 31/26

(21) Anmeldenummer: **88810461.9**

(22) Anmeldetag: **06.07.88**

(54) **Verfahren zum Messen der Einzugskraft an der Schnittstelle zwischen einem Werkzeug und der Spindelnase einer Werkzeugmaschine.**

(30) Priorität: **10.08.87 CH 3048/87**

(43) Veröffentlichungstag der Anmeldung:
**15.02.89 Patentblatt 89/07**

(45) Bekanntmachung des Hinweises auf die
Patenterteilung:
**16.12.92 Patentblatt 92/51**

(84) Benannte Vertragsstaaten:
**AT CH DE ES FR GB IT LI NL SE**

(56) Entgegenhaltungen:
**EP-A- 0 213 218
CS-B- 175 943
DD-A- 147 874
DD-A- 244 200**

(73) Patentinhaber: **Huser, Josef Paul
Lindenhöhe
CH-6045 Meggen(CH)**

(72) Erfinder: **Huser, Josef Paul
Lindenhöhe
CH-6045 Meggen(CH)**
Erfinder: **Ruede, Konrad
Lierenstrasse 42
CH-5417 Untersiggenthal(CH)**

(74) Vertreter: **Feldmann, Paul David et al
c/o Patentanwaltsbüro FELDMANN AG Kanalstrasse 17
CH-8152 Glattbrugg(CH)**

## Beschreibung

Die Erfindung bezieht sich auf eine Vorrichtung zur Ausübung des Verfahrens und auf eine Lehre zum Einstellen der Vorrichtung. Die Erfindung bezieht sich auch auf ein Verfahren zum Messen der Einzugskraft an der Schnittstelle zwischen einem Werkzeug und der Spindelnase einer Werkzeugmaschine. Zu kleine Einzugskräfte des Werkzeughalters in der Maschinenspindel können erhebliche Kosten verursachen. Messungen haben gezeigt, dass die Einzugskräfte oft weit unter den Sollwerten liegen. Das kann ernste Folgen haben. Nur eine ausreichende Einzugskraft erlaubt die volle Ausnutzung der Antriebsleistung. Grosse Einzugskräfte ermöglichen grosse Zerspannungsleistungen, kleine Einzugskräfte erlauben nur kleine Vorschübe und kleine Schnittiefen.

Genügend grosse Einzugskräfte sind ganz besonders wichtig wenn die Werkzeuge radial (seitlich) beansprucht werden. Dies ist vor allem beim Fräsen der Fall. Bei dieser Operation treten zufolge unterbrochenen Schnittes Schwingungen (Vibrationen) auf. Seitliche Kräfte bei gleichzeitig auftretenden Vibrationen sind einer Steilkegel-Verbindung nicht zuträglich. Die Verbindung lockert sich, das Werkzeug wird "herausgewalkt".

Eine ungenügende Einzugskraft hat Vibrationen beim Fräsen zur Folge und kann sich unter Umständen verheerend auswirken, es kann sich Passungsrost am Steilkegel bilden und es kann sogar die Bohrung der Maschinenspindel beschädigen.

Die Einzugskraft wird bei Werkzeugmaschinen mit automatischem Werkzeugwechsel von einer in der Spindel angeordneten Einzugsvorrichtung bestimmt. Der Maschinenlieferant gibt die Einzugskraft an, die beispielsweise von einer Feder oder einem Paket von Tellerfedern erzeugt wird. Bei der Aufstellung einer neuen Maschine ist es immer nützlich die vorgeschriebene Einzugskraft vor der Inbetriebnahme nachprüfen zu können. Aber auch später beim Betrieb, wenn die bearbeiteten Werkstücke geringfügige Ratterspuren aufweisen, ist es nützlich, die Einzugskraft nochmals zu überprüfen. Man kann auch jeweils nach einer bestimmten Betriebsdauer diese Prüfung routinemässig ausführen.

Ein solches Messverfahren war bisher aber kaum ausführbar, weil die dazu erforderlichen Mittel fehlten. Die DD-A-244'200 Patentschrift beschreibt ein "Messgerät für die an eingespannten Halterungen wirksamen Kräfte".

Mit diesem komplizierten Messgerät kann die Einzugskraft an der Schnittstelle zwischen Werkzeug und Spindelnase gemessen werden. Sowohl die Messung selber als auch die Vorbereitung zur Messung erweisen sich als sehr aufwendig.

Die Erfindung hat sich zur Aufgabe gestellt, ein Messverfahren anzugeben, das diese Nachteile vermeidet und die zur Messung erforderlichen Mittel in Form einer Vorrichtung und einer Lehre zu schaffen, die eine einfache und zuverlässige Messung der Einzugskraft erlaubt.

Im Patentanspruch 1 sind die Mittel einer Messvorrichtung zum Messen, der der Einzugskraft an der Schnittstelle zwischen einem Werkzeug und einer Spindelnase mit konischer Bohrung einer Werkzeugmaschine, sowie einer Lehre zum Einstellen der Messvorrichtung angegeben. Die Mittel umfassen, die im kennzeichnenden Teil des Patentanspruches 1 genannten Teile der Messvorrichtung und der Einstelllehre.

Der Patentanspruch 2 gibt die einzelnen Schritte zur Durchführung des Messverfahrens mit Hilfe der Einstelllehre und der Messvorrichtung nach Patentanspruch 1 an. Ausführungsbeispiele der Einstelllehre und der Messvorrichtung sind in der beigefügten Zeichnung dargestellt und das Messverfahren wird an Hand der Zeichnung erläutert.

Die Zeichnung zeigt in:

Fig. 1    den vorderen Teil einer Werkzeugspindel mit eingeseztem Werkzeughalter mit Steilkegel nach DIN 2080 in vereinfachter Darstellung, im Schnitt;

Fig. 2    denselben vorderen Teil der Werkzeugspindel mit der Messvorrichtung während des Messvorganges;

Fig. 3    der Werkzeughalter nach Figur 1 für sich mit aufgeschobener Einstelllehre;

Fig. 4    die Lehre nach Figur 3 für sich in Seitenansicht;

Fig. 5    die Einzelteile der Messvorrichtung;

Fig. 6    Einzelteile einer Messvorrichtung für einen grösseren Steilkegel.

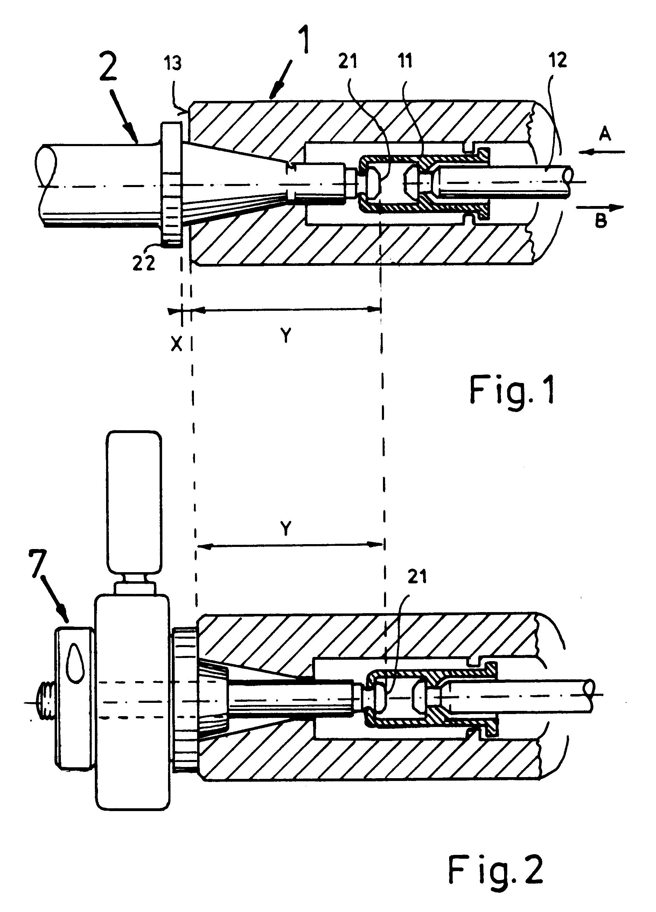

Figur 1 zeigt die Spindel 1 einer Werkzeugmaschine, die für einen automatischen Werkzeugwechsel eingerichtet ist. Die verschiedenen Werkzeuge wie zum Beispiel ein Bohrer, ein Fräskopf oder ein Ausdrehwerkzeug sind dazu mit einem Werkzeughalter 2 mit Steilkegel verbunden (das Werkzeug ist in der Zeichnung nicht dargestellt). Sämtliche Werkzeuge, die mit einem gleichen Steilkegel verbunden sind, können dann automatisch gewechselt werden. Die automatische Wechselvorrichtung zieht ein erstes Werkzeug mitsamt seinem Steilkonus aus der Spindel heraus und setzt ein anderes mit einem gleichen Steilkegel in die Spindelbohrung ein.

Die Werkzeugmaschine bremst dabei die Spindel bis zum Stillstand ab, löst das Werkzeug mit dem bisher gehaltenen Kegel aus der Spindelbohrung heraus und zieht den Kegel eines anderen Werkzeuges an dessen Einzugnippel fest in die Bohrung ein.

In der Spindel ist dazu eine Einzugsvorrichtung mit einer Zange 11 angebracht. Zum Betätigen der Zange, das heisst zum Oeffnen und zum Schliessen und Ausüben der Einziehkraft dient eine Stange 12. Wird die Stange in Richtung des Pfeiles A bewegt, öffnet sich die geschlitzte hülsenförmige Zange und gibt den, auf dem Kegel 20 angebrachten Einzugsnippel 21 frei.

Hat die automatische Werkzeugwechselvorrichtung ein anderes Werkzeug, das mit einem gleichen Kegel verbunden ist eingesetzt, bewegt sich die Stange 12 in Richtung des Pfeiles B, greift den Einzugsnippel und zieht den Kegel mit einer gewissen Einzugskraft in die konische Spindelbohrung ein, damit der Kegel satt in der Bohrung anliegt. Die Einzugskraft in Richtung des Pfeiles B wird beispielsweise von einer Feder ausgeübt, das Oeffnen der Zange entgegen der Federkraft geschieht beispielsweise durch einen Hydraulikantrieb in Richtung des Pfeiles A.

Die Figur 2 zeigt dieselbe Spindel mit einer Messvorrichtung während des Messens der Einzugskraft. Bevor aber diese Vorrichtung selber und der Messvorgang beschrieben wird, sei insbesondere darauf hingewiesen, dass der Einzugsnippel 21 beim Messen genausoweit in die Spindelbohrung hineinragen muss wie beim Betrieb, nämlich um den Abstand y. Einerseits soll und darf der Mitnehmerbund 22 des Werkzeughalters nie an der Kopfseite 13 der Spindel anliegen und weist daher einen Abstand x von der Spindelkopfseite auf. Andrerseits will man aber die Einzugskraft zwischen der Stirnseite 13 der Spindel und einem an der Messvorrichtung angebrachten Anschlag 7 messen.

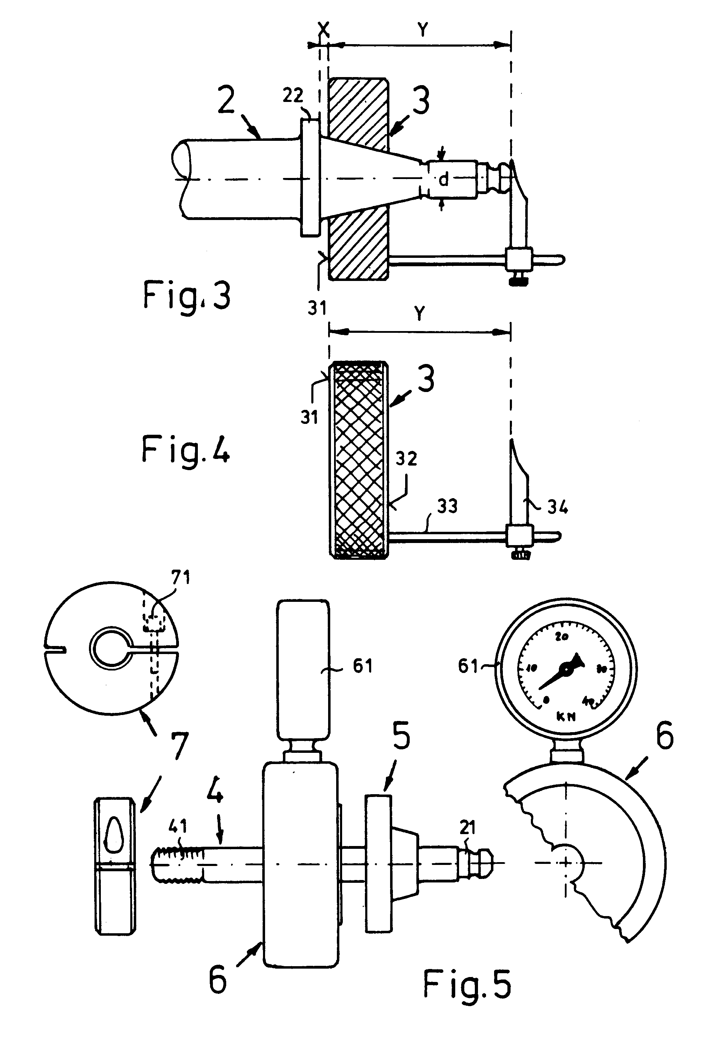

Bevor die Einzugskraft mit Hilfe der Messvorrichtung gemessen werden kann, muss sie dementsprechend eingestellt werden. Dazu dient die in Figur 4 dargestellt Einstelllehre. Die Figur 3 zeigt die Verwendung der Lehre bei der Einstellung auf das Mass y.

Die Lehre besteht aus einem Passring 3 mit einer konischen Bohrung die genau der genormten Bohrung an der Kopfseite der Spindel entspricht. Die Lage der Seitenfläche 31 des Passrings entspricht daher genau der Lage der Kopfseite 13 der Spindel (siehe Figur 1). Wird daher der Passring wie in Fig. 3 dargestellt, auf den Steilkonus eines Werkzeughalters 2 aufgesetzt, verbleibt hier wie bei der Betriebslage nach Figur 1 ein Abstand x zwischen der Fläche 31 und dem Mitnehmerbund 22 des Werkzeughalters. An der, der Seitenfläche 31 gegenüberliegenden Fläche 32 des Passrings 3 ist ein Höhen- Messabtaster angebracht, der aus einem senkrecht zur Fläche 32 emporragenden Stab 33 und einem auf dem Stab festellbar verschiebbar angebrachten Schnabel 34 besteht. Ist der Schnabel 34 festgesetzt, ist damit das wichtige Mass y gefunden! Der Stab 33 ist im Passring 3 axial fest aber schwenkbar um seine Mitten-Längsachse gehalten. Dies vereinfacht die Einstellung der Messvorrichtung auf das Mass y.

Die Messvorrichtung umfasst mehrere separate zusammenfügbare Teile die in Figur 5 dargestellt sind, nämlich einen Passbolzen 4 in dem an einem Ende ein Einzugsnippel 21 eingeschraubt ist. Der Durchmesser des Passbolzens entspricht dem Durckmesser d (siehe Figur 3) des zylindrischen Endes am Kegel des Werkzeughalters. Auf den Bolzen sind eine Anschlag-Zentrierhülse 5 und eine ringförmigehydraulische Druckmessdose 6 mit einem Manometer 61 aufgeschoben. Der Manometer hat eine auf kN geeichte Skala.

An dem, dem Einzugsnippel gegenüberliegenden Ende ist der Bolzen 4 mit einem Gewinde 41 versehen auf das eine den Anschlag bildende Mutter 7 aufschraubbar ist. Die Mutter ist auf einer Seite geschlitzt und kann daher, wenn die Vorrichtun auf das Mass y eingestellt ist mit Hilfe der Feststellschraube 71 fixiert werden.

Sämtliche Teile der Messvorrichtung nehmen die in Figur 2 dargestellte Lage ein, sie ist dann bereit für die Messung. Bei der Messung wird die Maschine angehalten, die Zange 11 geöffnet und dann die Schliess-Einzugbewegung eingeleitet. Nun kann die Einzugskraft ohne weiteres am Manometer abgelesen werden. Für Maschinen wo die Ablesung schwierig ist, kann der Manometer mit einem Schleppanzeiger versehen sein.

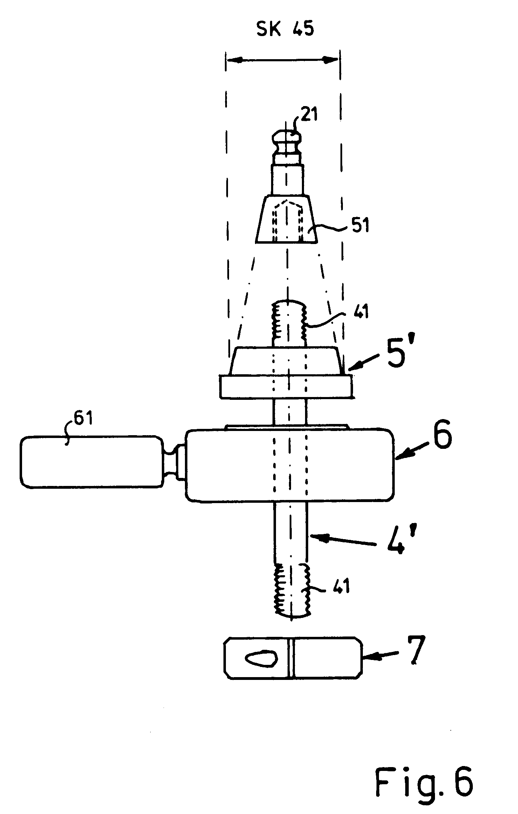

Die Figur 6 zeigt eine Variante der Einzelteile der Messvorrichtung. Der Passbolzen 4' hat an beiden Enden ein Gewinde 41 und der Einzugsnippel ist nicht direkt im Bolzen, sondern in das Ende eines kleineren Zwischenteiles 51 eingeschraubt.

Sowohl dieser Zwischenteil 51 wie die Hülse 5 sind so dimensioniert, dass sie in der Spindelbohrung mit Spiel einschiebbar sind, damit die Messung nicht beeinträchtigen können.

Wie aus der Figur 6 hervorgeht sind die Hauptbestandteile dieser Messvorrichtung identisch mit denjenigen der Vorrichtung nach Figur 5. Lediglich der Passbolzen 4' und die der Vernindung dienenden Teile 5' und 51 sind anders dimensioniert. Die Teile nach Figur 5 eignen sich zum Messen der Einzugskraft eines Werkzeughalters mit einem Steilkegel SK 30, während die Teile nach Figur 6 zum Messen der Einzugskraft an einem Werkzeughalter mit einem grösseren Kegel SK 45 geeignet sind.

Zum Einstellen der Vorrichtung muss natürlich auch eine andere Einstellvorrichtung mit einem Passring 3 für einen Kegel SK 45 benützt werden.

Mit wenigen auswechselbaren Teilen kann daher die Messvorrichtung zum Messen der Einzugskraft von Werkzeughaltern mit Steilkegel SK 30 bis SK 50 benützt werden.

Auch andere Grössen sind mittels dieses Systems messbar.

## Patentansprüche

1. Messvorrichtung zum Messen der Einzugskraft an der Schnittstelle zwischen einem Werkzeug und der Spindelnase mit konischer Bohrung einer Werkzeugmaschine, sowie Lehre zum Einstellen der Messvorrichtung, dadurch gekennzeichnet, dass die Messvorrichtung folgende Teile umfasst:

   a) einen Bolzen (4), der an einem Ende ein Einzugselement (21) entsprechend dem Einzugselement des Werkzeuges trägt und dessen anderes Ende mit einem Aussengewinde (41) versehen ist,

   b) eine Zentrierhülse (5), in welcher der Bolzen (4) gleitend geführt ist,

   c) einen den Bolzen (4) umgreifender, ringförmiger Druckmessapparat, in Form einer hydraulischen Messdose (6) mit manometrischer Anzeigevorrichtung (61),

   d) eine auf dem Gewinde (41) des Bolzens (4) aufschraubbare und feststellbare Anschlagmutter (7), und dass die Lehre einen Passring (3) mit einer konischen Bohrung umfasst, die der Bohrung am Spindelende der Werkzeugmaschine entspricht, wobei auf der Seite mit der kleineren Bohrung ein Höhen-Messabtaster (33,34) angebracht ist.

2. Verfahren zum Messen der Einzugskraft mit Hilfe der Messvorrichtung und der Einstelllehre nach Patentanspruch 1, gekennzeichnet durch folgende Schritte:

   a) an einem Werkzeug mit Hilfe der Lehre (3) die Eindringtiefe (y) des Einzugselementes (21) in die Spindelbohrung messen;

   b) zusammenfügen der Teile der Messvorrichtung und mit Hilfe der Anschlagmutter (7) so einstellen, dass der Abstand vom Ende des Einzugselementes bis zum Flansch der Zentrierhülse (5) genau gleich der gemessenen Eindringtiefe (y) ist;

   c) Einsetzen der Messvorrichtung in die Spindelbohrung bis der Flansch der Zentrierhülse (5) auf der Spindelnase satt aufliegt;

   d) die Einzugsvorrichtung der Werkzeugmaschine betätigen und die Einzugskraft am Druckmessapparat ablesen.

3. Messvorrichtung nach Anspruch 1, dadurch gekennzeichnet, dass der Bolzen (4) an beiden Enden mit einem Aussengewinde (41) versehen ist, und dass auf einem Ende ein Ergänzungsteil (51) mit einem Einzugselement (21) aufgeschraubt ist.

4. Messvorrichtung nach Anspruch 1, dadurch gekennzeichnet, dass die Anschlagmutter (7) geschlitzt ist und mit einer Feststellschraube (71) versehen ist.

5. Messvorrichtung nach Anspruch 1, dadurch gekennzeichnet, dass die Anzeigevorrichtung (61) eine in kN geeichte Skala hat und mit einem Schleppzeiger versehen ist.

6. Messvorrichtung nach Anspruch 1, dadurch gekennzeichnet, dass der Höhen-Messabtaster (33,34) der Lehre einen vertikal zur Fläche (32) mit der kleineren Bohrung des Passringes (3) verlaufenden Stab (33) aufweist, auf dem ein Messschnabel (34) höhenverschiebbar und feststellbar angeordnet ist, und dass der Stab (33) achsial fest aber um seine Mitten-Längsachse schwenkbar im Passring gehalten ist.

## Claims

1. Measuring device for measuring the feed pressure at the interface between a tool and the conically-drilled spindle nose of a machine tool, and a gauge for adjusting the measuring device, characterised in that the measuring device comprises the following parts:

   a) a pin (4) which has at one end a feed element (21) corresponding to the feed element of the tool and at the other end an external thread (41),

   b) a centring ring (5) in which the pin (4) is a sliding fit,

   c) an annular pressure-measuring device fitting round the pin (4) in the form of a hydraulic load cell (6) with a manometric indicator (61),

   d) a stop nut (7) fitting the thread (41) of pin (4) and lockable on it, and characterised in that the gauge includes an adjusting ring (3) with a conical bore matching the bore of the end of the spindle of the machine tool, the side of the adjusting ring with the smaller bore size being fitted with an extension-measuring feeler (33,34).

2. Procedure for measuring feed pressure by means of the measuring device and adjusting gauge according to Claim 1, characterised by the following steps:

   a) measuring the penetration depth (y) of the feed element (21) in the bore of a tool spindle by means of the gauge (3);

   b) fitting together the parts of the measuring device and so adjusting them by means of the stop nut (7) that the distance from the end of the feed element to the flange of the centring ring (5) exactly equals the measured penetration depth (y);

c) inserting the measuring device into the spindle bore until the flange of the centring ring (5) fits snugly against the spindle nose;

d) operating the feed mechanism of the machine tool and reading off the feed pressure from the pressure gauge.

3. Measuring device according to Claim 1, characterised in that the pin (4) has an external thread (41) at both ends, and in that a supplementary part (51) with a feed element (21) is screwed to one end of it.

4. Measuring device according to Claim 1, characterised in that the stop nut (7) is slotted and is provided with a locking screw (71).

5. Measuring device according to Claim 1, characterised in that the indicator (61) has a scale calibrated in kN and is fitted with a trailing pointer.

6. Measuring device according to Claim 1, characterised in that the extension-measuring feeler (33,34) of the gauge is provided with a rod (33) running vertically to the face (32) with the smaller bore of the adjusting ring (3), along which rod a measuring nib (34) is movable and lockable, and in that the rod (33) is fixed axially in the adjusting ring but is rotatable about its central longitudinal axis.

**Revendications**

1. Dispositif de mesure pour mesurer la force d'introduction à l'interface entre un outil et le nez de broche à alésage tronconique d'une machine-outil, ainsi que gabarit pour régler le dispositif de mesure , caractérisés par le fait que le dispositif de mesure comprend les parties suivantes :

a) un axe (4) qui porte, à une extrémité, un élément d'introduction (21) correspondant à l'élément d'introduction de l'outil, et dont l'autre extrémité est munie d'un filetage extérieur (41),

b) une douille de centrage (5), dans laquelle l'axe (4) est guidé à coulissement,

c) un appareil annulaire de mesure de pression, qui ceinture l'axe (4) et revêt la forme d'une boîte dynamométrique hydraulique (6) à dispositif (61) d'affichage manométrique,

d) un écrou de butée (7) pouvant être vissé et arrêté sur le filetage (41) de l'axe (4) ; et par le fait que le gabarit présente une bague d'adaptation (3), percée d'un trou tronconique qui correspond à l'alésage à l'extrémité de la broche de la machine-outil, un palpeur (33, 34) mesurant la hauteur étant disposé du côté présentant le trou plus faible.

2. Procédé pour mesurer la force d'introduction à l'aide du dispositif de mesure et du gabarit de réglage selon la revendication 1, caractérisé par les étapes consistant à :

a) mesurer sur un outil, à l'aide du gabarit (3), la profondeur de pénétration (y) de l'élément d'introduction (21) dans l'alésage de la broche ;

b) assembler les pièces du dispositif de mesure et les ajuster à l'aide de l'écrou de butée (7), de telle sorte que la distance comprise entre l'extrémité de l'élément d'introduction et la collerette de la douille de centrage (5) soit exactement égale à la profondeur de pénétration mesurée (y) ;

c) insérer le dispositif de mesure dans l'alésage de la broche, jusqu'à ce que la collerette de la douille de centrage (5) repose à plat contre le nez de broche ;

d) actionner le dispositif d'introduction de la machine-outil, et lire la force d'introduction sur l'appareil de mesure de pression.

3. Dispositif de mesure selon la revendication 1, caractérisé par le fait que l'axe (4) est muni d'un filetage extérieur (41) aux deux extrémités ; et par le fait qu'une pièce complémentaire (51), dotée d'un élément d'introduction (21), est vissée sur une extrémité.

4. Dispositif de mesure selon la revendication 1, caractérisé par le fait que l'écrou de butée (7) est fendu et est équipé d'une vis d'arrêt (71).

5. Dispositif de mesure selon la revendication 1, caractérisé par le fait que le dispositif d'affichage (61) présente une échelle graduée étalonnée en kN et est muni d'une aiguille indicatrice.

6. Dispositif de mesure selon la revendication 1, caractérisé par le fait que le palpeur (33, 34) du gabarit mesurant la hauteur, comporte une barrette (33) qui s'étend verticalement par rapport à la surface (32) pourvue du trou le plus faible de la bague d'adaptation (3) et sur laquelle un bec de mesure (34) est disposé avec faculté de coulissement en hauteur et d'arrêt ; et par le fait que la barrette (33) est retenue dans la bague d'adaptation, avec immobilisation axiale mais avec faculté de pivotement autour de son axe médian longitudinal.

EP 0 303 564 B1

Fig. 1

Fig. 2

6

Fig.3

Fig.4

Fig.5

SK 45

21

51

41

5'

61

6

4'

41

7

Fig.6